# EUROPÄISCHE PATENTSCHRIFT

(11) **EP 2 571 666 B1**
(45) Veröffentlichungstag und Bekanntmachung des Hinweises auf die Patenterteilung: **07.08.2019**
(21) Anmeldenummer: 11721753.9
(22) Anmeldetag: 17.05.2011
(51) Int. Cl.: B29C 45/14, B29C 45/16, G06K 19/077, G06K 19/02, B42D 25/00, B29L 17/00

(54) **VERFAHREN ZUR HERSTELLUNG EINES INLAYS FÜR EIN WERT- UND/ODER SICHERHEITSDOKUMENT**
METHOD FOR THE PRODUCTION OF AN INLAY FOR A VALUE AND/OR SECURITY DOCUMENT
PROCÉDÉ DE FABRICATION D'UN ELÉMENT INCRUSTÉ POUR UN DOCUMENT DE VALEUR ET/OU DE SÉCURITÉ

(30) Priorität: 19.05.2010 DE 102010020969
(43) Veröffentlichungstag der Anmeldung: 27.03.2013
(73) Patentinhaber: Bundesdruckerei GmbH, 10969 Berlin (DE)
(72) Erfinder: ANTONCZIK, Boris, 13439 Berlin (DE); KRÜGER, Per, 14197 Berlin (DE); EHREKE, Jens, 12587 Berlin (DE); SIEBERT, Martin, 10965 Berlin (DE); KNEBEL, Michael, 10405 Berlin (DE); LÖWE, Reinhard, 14542 Werder OT Phöben (DE); VON CZAPIEWSKI, Christoph, 10713 Berlin (DE)
(74) Vertreter: Patentanwälte Bressel und Partner mbB
(86) Internationale Anmeldenummer: PCT/EP2011/057990
(87) Internationale Veröffentlichungsnummer: WO 2011/144627

(56) Entgegenhaltungen:
- WO-A1-2007/034129
- WO-A1-2007/034129
- WO-A2-2005/028209
- WO-A2-2005/028209
- DE-A1- 10 212 014
- DE-A1- 10 212 014
- US-A- 5 192 682
- US-A- 5 192 682
- US-A1- 2010 025 477
- US-A1- 2010 025 477

## Beschreibung

Die Erfindung betrifft ein Verfahren zur Herstellung eines Halbzeugs, welches ein Inlay für ein Dokument umfasst oder ist.

Aus dem Stand der Technik sind Sicherheitsdokumente bekannt, die zum Speichern von Informationen und/oder zum Ausführen eines Authentifizierungsverfahrens oder Ähnlichem Funktionselemente, beispielsweise in Form eines Chipmoduls, umfassen. Eine Integration dieser Funktionselemente in ein Dokument, welches in der Regel einen Dokumentenkörper oder Kartenkörper umfasst, welcher aus einem oder mehreren Kunststoffmaterialien hergestellt ist, hat sich als schwierig erwiesen. Ein Verfahren besteht darin, in die Kunststoffschichten oder -folien, in die das Funktionselement integriert werden soll, Aussparungen einzubringen und das Funktionselement anschließend beispielsweise mittels eines Klebstoffs einzufügen und zu befestigen.

Aus der DE 102 12 014 A1 ist eine Chipkarte sowie ein Verfahren zum Herstellen einer Chipkarte mit einem eine Kavität aufweisenden, mittels eines Spritzgussverfahrens oder Spritzprägeverfahrens hergestellten Chipkartenkörpers bekannt, in den wenigstens ein Funktionselement integriert ist, das über zumindest einen elektrischen Anschluss verfügt, wobei der wenigstens eine elektrische Anschluss bis in die Kavität hinein ragt, so dass ein während des Spritzgießens oder Spritzprägens zur Erzeugung der Kavität eingesetzter zweiteiliger Formstempel zwischen seinen Formhälften einen elektrischen Anschluss und damit das Funktionselement festsetzt. Hierdurch wird erreicht, dass die elektrischen Anschlussteile während des Spritzpräge- und Spritzgussverfahrens nicht mit einem Kunststoff überzogen werden und zugleich das Funktionselement, welches beispielsweise eine Batterie ist, fixiert ist. Bei der im Stand der Technik beschriebenen Chipkarte wird ein Chipmodul anschließend in die Kavität eingebracht und mit den Ahnschlussteilen der Batterie kontaktiert.

Solche Herstellungsverfahren sind insbesondere für solche Dokumente nachteilig, bei denen eine Fälschung oder Verfälschung des Dokuments, die über ein Austauschen und/oder Manipulieren des Funktionselements vorgenommen wird, verhindert werden soll.

Daher wird es bevorzugt, solche Funktionselemente in das Innere des Dokuments, d.h. das Innere eines Dokumentenkörpers oder Kartenkörpers zu integrieren. Bei Dokumenten, die aus einer Vielzahl von Folien oder Schichten beispielsweise in einem Laminationsprozess zusammengefügt werden, besteht eine Möglichkeit darin, in einige Folien Aussparungen einzubringen und in diese Aussparungen das Funktionselement vor dem Laminieren einzubringen und die Aussparung an der Ober- und Unterseite jeweils mit mindestens einer Folie abzudecken. Im Laminationsprozess entsteht so ein Dokumentenkörper, in den das Funktionselement vollständig integriert ist. Als nachteilhaft hat es sich jedoch erwiesen, dass in die notwendigerweise vorhandenen Zwischenräume zwischen dem Funktionselement und den Rändern der Aussparungen beim Laminieren Material fließt, so dass die Dokumentkörper häufig eine nicht vollständig ebene Oberfläche aufweisen. Fertigungstechnisch ist es darüber hinaus vorteilhaft, das Funktionselement zunächst in ein Halbzeug zu integrieren, welches anschließend mit weiteren Folien und Schichten zu dem Dokumentenkörper verarbeitet wird.

Insbesondere wenn mehrere Funktionselemente, die miteinander in Wirkbeziehung stehen, beispielsweise elektrisch leitend verbunden sind, in ein Dokument integriert werden sollen, ist es wünschenswert, dass diese in ein Inlay integriert werden, nachdem diese relativ zueinander positioniert und miteinander verbunden worden sind.

Sicherheitsdokumente sollen im Gebrauch eine hohe Widerstandsfähigkeit und Langlebigkeit aufweisen. Aus diesem Grund werden Dokumente mit Karten- bzw. Dokumentkörpern ausgebildet, die hauptsächlich aus Kunststoff bestehen. Ist in einen solchen Kartenkörper ein Funktionselement, beispielsweise ein Chipmodul integriert, welches zur Versorgung mit Energie und zum Informationsaustausch mit einer Antenne gekoppelt ist, die als weiteres Funktionselement ebenfalls in den Karten- bzw. Dokumentenkörper integriert ist, so hat es sich gezeigt, dass aufgrund der unterschiedlichen Eigenschaften der Werkstoffe um die Funktionselemente, beispielsweise die Antennen oder das Chipmodul, Mikrorisse entstehen können, die sich dann durch den Dokumentenkörper ausbreiten können und so eine Langlebigkeit und Haltbarkeit des Dokuments stark herabsetzen können.

Aus der WO 2007/034129 A1 sind ein Dokument und ein Verfahren zu dessen Herstellung bekannt. Beschrieben ist u.a eine Ausführungsform eines Sicherheitsdokuments, welches ein Inlay umfasst, in dem ein Chip integriert ist. Ein solches Inlay kann gemäß einer Ausführungsform so gefertigt werden, dass ein Chip und ein Deckbogen mittels eines Spritzgussverfahrens randlos durch ein Plastikmaterial eingeschlossen werden.

Aus der US 5,192,682 A ist ein Verfahren zur Herstellung einer dünnen Halbleiteranordnung bekannt, bei der ein innerer Rahmen zum Anordnen eines Chipmoduls innerhalb eines äußeren Rahmens vorgesehen ist, der die Umrandung der dünnen Halbleiterstrukturanordnung bildet. Das Chip-Modul wird in dem inneren Rahmen so angeordnet, dass die elektrische Anschlussoberfläche des Chip-Moduls freigelegt ist. Die Befestigung des Chip-Moduls erfolgt über ein Ausfüllen des äußeren und inneren Rahmens mit einem Kunstharz.

Aus der US 2010/0025477 A1 ist ein Sicherheitsdokument bekannt, in das eine RFID-Vorrichtung integriert ist.

Die WO 2005/028209 A2 beschreibt ein Einlageblatt für ein buchartiges Identifikationsdokument. Das Einlageblatt ist mit einer Naht in einem Scharnierbereich entlang einer Seite mit übrigen Buchteilen verbindbar. Das Einlageblatt besteht aus mindestens einer Schicht aus einem thermoplastischen Elastomer und mindestens einer weiteren Schicht. In die thermoplastische Schicht kann ein Mikrochip integriert sein.

Die DE 102 12 014 A1 beschreibt eine Chipkarte mit einem eine Kavität aufweisenden, mittels eines Spritzgussverfahrens oder eines Spritzprägeverfahrens hergestellten Chipkartenkörpers, in den wenigstens ein Funktionselement integriert ist, das über mindestens einen elektrischen Anschluss verfügt, wobei der wenigstens eine elektrische Anschluss bis in die Kavität hineinreicht, sodass ein während des Spritzgießens bzw. Spritzprägens zur Erzeugung der Kavität eingesetzter zweiteiliger Formstempel zwischen seinen Formhälften den elektrischen Anschluss und damit ein Funktionselement festsetzt.

Der Erfindung liegt somit die Aufgabe zugrunde, ein Verfahren zur Herstellung eines Halbzeugs, welches ein Inlay für ein Sicherheitsdokument umfasst oder ist, zu schaffen, wobei das Halbzeug fertigungstechnisch einfach herzustellen und weiterverarbeitbar ist und eine Haltbarkeit des Halbzeugs insbesondere bei mechanischer und thermischer Belastung gesteigert ist.

### Grundidee der Erfindung

Die Aufgabe wird erfindungsgemäß dadurch gelöst, dass ein Halbzeug unter Verwendung eines Spritzprägeverfahrens hergestellt wird, wobei das Inlay aus mindestens einem ersten Kunststoffmaterial und mindestens einem zweiten Kunststoffmaterial ausgebildet wird, wobei das zweite Kunststoffmaterial von dem ersten Kunststoffmaterial verschieden ist und das Halbzeug im Bereich der flächigen Erstreckung des Inlays senkrecht zu der flächigen Erstreckung eine einheitliche Stärke aufweist. Ein solches Inlay kann einfach in einen Dokumentenkörper in weiteren Herstellungsschritten, beispielsweise Laminationsschritten integriert werden. Dadurch dass das Inlay eine flächige Gestalt aufweist, die eine einheitliche Stärke senkrecht zu der flächigen Erstreckung aufweist, kann das Inlay mit weiteren Folien oder Schichten zu einem Dokumentenkörper, beispielsweise in einem Laminationsverfahren zusammengefügt werden.

### Definitionen

Als Sicherheitsdokument wird jedes Dokument bezeichnet, die physikalische Entitäten sind, die gegen ein unautorisiertes Herstellen und/oder Verfälschen durch Sicherheitsmerkmale geschützt sind.

Sicherheitsmerkmale sind solche Merkmale, die ein Verfälschen und/oder Duplizieren gegenüber einem einfachen Kopieren zumindest erschweren. Physikalische Entitäten, die ein Sicherheitsmerkmal umfassen oder ausbilden, werden als Sicherheitselemente bezeichnet. Ein Sicherheitsdokument kann mehrere Sicherheitsmerkmale und/oder Sicherheitselemente umfassen. Im Sinne der hier festgelegten Definition stellt ein Sicherheitsdokument auch immer ein Sicherheitselement dar. Beispiele für Sicherheitsdokumente, welche auch Wertdokumente umfassen, die einen Wert repräsentieren, umfassen beispielsweise Reisepässe, Personalausweise, Führerscheine, Identitätskarten, Banknoten, Postwertzeichen, Kreditkarten, Smartcards und Etiketten, um nur einige beispielhaft aufzuzählen. Als Smartcards werden solche Sicherheitsdokumente bezeichnet, die ein Chipmodul umfassen, welches kontaktlos Informationen mit einem Verifikationsgerät austauschen kann. Hierfür umfasst eine Smartcard neben dem Chipmodul eine hiermit gekoppelte Antenne, die in den Dokumenten- oder Kartenkörper integriert ist. Die verwendete Datenaustauschtechnik wird auch als RFID-Technik bezeichnet (Radio-Frequency-Identification-Technik).

Ein Spritzprägeverfahren ist ein Herstellungsverfahren, bei dem ein erwärmter thermoplastischer Kunststoff in eine nicht vollständig geschlossene Form eingespritzt wird und die Form erst nach dem vollständigen oder nahezu vollständigen Füllen der Form verschlossen wird, um einen bei dem Spritzprägeverfahren auftretenden Enddruck in der Form herzustellen, nachdem das erwärmte Kunststoffmaterial sich in der Form weitestgehend vollständig verteilt hat.

Die Begriffe Kunststoff und Kunststoffmaterial werden hier als Synonyme verwendet. Kunststoffe oder Kunststoffmaterialien werden als verschieden angesehen, wenn sie im verarbeiteten Zustand unterschiedliche Eigenschaften, beispielsweise unterschiedliche mechanische Eigenschaften, thermische oder auch optische Eigenschaften aufweisen. Hierbei wird die Eigenschaft des Volumenbereichs betrachtet, der durch den entsprechenden Kunststoff bzw. das Kunststoffmaterial ausgefüllt ist.

Als Inlay wird eine Einheit verstanden, die in einen kartenförmigen Dokumentenkörper als Innenlage integrierbar ist.

### Bevorzugte Ausführungsformen

Insbesondere wird ein Verfahren zum Herstellen eines Halbzeugs, welches ein Inlay für ein Dokument umfasst oder ist, vorgeschlagen, welches die Schritte umfasst: Bereitstellen mindestens eines ersten Kunststoffmaterials und Bereitstellen mindestens eines von dem ersten Kunststoffmaterial verschiedenen zweiten Kunststoffmaterials, Ausführen eines Spritzprägeverfahrens unter Verwendung des ersten und des zweiten Kunststoffmaterials zum Ausbilden des Inlays, wobei das Inlay senkrecht zu seiner flächigen Erstreckung eine einheitliche Stärke aufweist. Hierdurch wird ein Halbzeug geschaffen, welches ein Inlay ist oder umfasst, das auf einfache Weise in einen Dokumentenkörper, beispielsweise in einem Laminationsverfahren gemeinsam mit weiteren Folien eingebracht werden kann.

Als Kunststoffe bzw. Kunststoffmaterialien kommen insbesondere Derivate oder auch Kombinationen der folgenden Kunststoffe in Frage: Polycarbonat (PC), insbesondere Bisphenol-A-Polycarbonat, Polyethylenterephthalat (PET), deren Derivate wie Glykolmodifiziertes PET (PET-G), Polyvinylchlorid (PVC), Acrylnitril-Butadien-Styrol (ABS), thermoplastische Elastomere (TPE), insbesondere thermoplastisches Polyurethan (TPU). Auch andere Polyurethane können eingesetzt werden. Zusätzlich können auch wärmehärtende Harze und/oder Kunststoffe oder Mehrkomponentensysteme verwendet werden. Wärmehärtende Kunststoffe weisen den Vorteil auf, dass diese nach dem Härten durch Wärmeeinwirkung nicht mehr veränderbar sind. Der Vorteil der Verwendung eines Spritzprägeverfahrens, welches unterschiedliche Kunststoffmaterialien verwendet, um ein Inlay zu erzeugen, liegt darin, dass es möglich ist, das Inlay so auszugestalten, das dieses Wärme- und Spannungsbelastungen in einem Sicherheitsdokument, in welchem das Inlay integriert wird, besser standhält. Während des Spritzprägeverfahrens werden die einzelnen verwendeten Kunststoffmaterialien so miteinander verbunden, dass sich ein Monoblock für das Inlay bildet. Der Kunststoff, der an ein Funktionselement angrenzt, kann so gewählt werden, dass dieser das Funktionselement im Fertigungsprozess und Gebrauch optimal schützt. Zugleich können die Eigenschaften so gewählt werden, dass Spannungsrisse unterdrückt werden.

Besonders bevorzugt wird eine Trägerfolie mit mindestens einem Funktionselement bestückt oder mit mindestens einem Funktionselement bestückt bereitgestellt und in einem ersten Spritzprägeschritt des Spritzprägeverfahrens das mindestens eine Funktionselement von dem ersten Kunststoffmaterial ummantelt und anschließend mit einem weiteren Spritzprägeschritt des Spritzprägeverfahrens das zweite Kunststoffmaterial aufgebracht. Hierdurch wird erreicht, dass das erste Kunststoffmaterial das mindestens eine Funktionselement ummantelt und an der Trägerfolie so fixiert, das eine Delokalisation während des zweiten Spritzprägeschrittes ausgeschlossen ist. Man erhält somit ein Halbzeug, bei dem der erste Volumenbereich ein erstes Funktionselement ummantelt.

Um eine möglichst flache, d.h. eine geringe Stärke senkrecht zur flächigen Ausdehnung des Inlays aufweisendes Halbzeug zu erhalten, wird das mindestens eine Funktionselement bei einer bevorzugten Ausführungsform in einer Aussparung der Trägerfolie angeordnet bzw. die Trägerfolie so bereitgestellt, dass das Funktionselement in einer Aussparung angeordnet ist. Weiterhin ist es vorteilhaft, um eine flache Bauform des Inlays zu gewährleisten, dass eine Oberseite des mindestens einen Funktionselements einen Teil der Oberseite des Inlaybereichs bildet. Dies bedeutet, dass das Ummanteln des mindestens einen Funktionselements so vorgenommen wird, dass eine Oberseite des Funktionselements vorzugsweise bündig mit dem ummantelnden ersten Kunststoffmaterial abschließt. Wird das Funktionselement in einer Aussparung der Trägerfolie angeordnet oder ist dieses in einer Aussparung angeordnet, so wird eine Stärke des Inlays durch eine maximale Ausdehnung des Funktionselements senkrecht zur Flächenerstreckung des Inlays festgelegt. Dieses gilt insbesondere für gekapselte Chipmodule. Bei ungekapselten Chips wird eine Stärke des Inlays in der Regel größer als die des Chips (Inlays) gewählt. Da das mindestens eine Funktionselement beim Spritzprägeschritt von heißem Kunststoffmaterial umflossen und ummantelt wird, ist auch in einem späteren Laminationsprozess keine Schrumpfung des ersten Kunststoffmaterials bei der Lamination zu befürchten, so dass keine Absätze zwischen dem mindestens einem Funktionselement und dem ummantelnden Kunststoffmaterial entstehen, auch wenn ein Teil der Oberfläche des Inlays durch das Funktionselement gebildet ist. In dem fertigen Halbzeug ummantelt bei einer Ausführungsform somit der erste Volumenbereich das erste Funktionselement.

Durch die Anwendung eines Spritzprägeverfahrens zur Ummantelung des mindestens einen Funktionselements wird gewährleistet, dass nur relativ moderate Strömungsgeschwindigkeiten und -drücke beim Ausbilden des Volumenbereichs, der das mindestens eine Funktionselement ummantelt, verwendet werden, und eine Deplatzierung des Funktionselements auf der Oberfläche der Trägerfolie vermieden werden kann.

Insbesondere bei Ausführungsformen, bei denen das mindestens eine Funktionselement mit einem weiteren Funktionselement verbunden ist und/oder in einer Wechselbeziehung steht, welches ebenfalls auf der Trägerfolie angeordnet wird oder ist, ist es von besonderem Vorteil, das mindestens eine Funktionselement durch das erste Kunststoffmaterial vorzufixieren, bevor das Fertigstellen des Inlays durch mindestens einen weiteren Prägeschritt und das Aufbringen des mindestens zweiten Kunststoffmaterials erfolgt.

Bei einer bevorzugten Ausführungsform ist das mindestens eine Funktionselement ein Chipmodul. Als weiteres Funktionselement ist mit diesem vorzugsweise eine Antenne verbunden. Bei einer Ausführungsform der Erfindung wird die Antenne drucktechnisch auf die Trägerfolie aufgebracht. Bei einer anderen Ausführungsform wird auf der Trägerfolie eine Antenne in Form eines leitfähigen Materials aufgebracht, beispielsweise in Form einer Metallbeschichtung oder eines Metalldrahts. Ebenso können leitende Kunststoffe, wie Kohlenstoffnanoröhrchen (engl.: carbon nano tubes), eingesetzt werden.

Während das weitere Funktionselement, sofern es sich um eine Antenne handelt, die in der Regel aus dünnen Drähten oder Leiterbahnen besteht, und daher eine recht hohe Flexibilität gegenüber mechanischen Beanspruchungen aufweist, umfasst ein Chipmodul in der Regel einen flächig ausgebildeten starren Körper, beispielsweise ein Halbleitersubstrat, in dem oder auf dem Halbleiterschaltkreise ausgebildet sind. Das mindestens eine Funktionselement, sofern es sich um ein Chipmodul handelt, weist somit deutlich andere mechanische Eigenschaften bei mechanischer oder thermischer Belastung auf als ein Kunststoffmaterial. Daher ist es besonders vorteilhaft, wenn das mindestens eine Funktionselement von einem Kunststoffmaterial umgeben wird, welcher eine höhere Elastizität aufweist, als das Kunststoffmaterial, aus dem zumindest ein Großteil des restlichen Volumens des Inlays gebildet ist. Bei einer bevorzugten Ausführungsform dieser Art wird erreicht, dass Spannungsrisse angrenzend an das Chipmodul vollständig oder weitestgehend vermieden werden, da die Spannungen, die auftreten, durch das mit einer höheren Elastizität ausgebildete erste Kunststoffmaterial "aufgenommen" werden. An dieser Stelle wird darauf hingewiesen, dass Eigenschaften, die im Bezug auf die einzelnen verwendeten Kunststoffmaterialien hier angegeben werden, sich jeweils auf Eigenschaften des Kunststoffes oder Kunststoffmaterials unter Normalbedingungen im fertig verarbeiteten Halbzeug beziehen.

Insbesondere bei buchartigen Sicherheitsdokumenten ist es heutzutage üblich, eine Seite eines solchen Buches ebenfalls durch einen Kartenkörper aus einem Kunststoffmaterial zu bilden, der vorzugsweise ebenfalls ein oder mehrere integrierte Funktionselemente, beispielsweise ein Chipmodul und eine Antenne umfasst. Da die Kunststoffmaterialien, die als Hauptbestandteile eines solchen Dokumentenkörpers verwendet werden, beispielsweise Polycarbonate oder PVC unter Normalbedingungen nur eine geringe Elastizität aufweisen, eignen sich diese nicht, um sie direkt, beispielsweise in ein Passbuch, einzubinden. Vielmehr ist es üblich, die Kartenkörper mit einem Laschenstreifen aus einem Material zu verbinden, das eine hohe Elastizität aufweist und so einer häufigen Biege- und Knickbelastung dauerhaft widersteht. Solche Materialien sind beispielsweise thermoplastische Elastomere, insbesondere thermoplastische Polyurethane. Bei einer besonders bevorzugten Ausführungsform eines Halbzeugs, welches ein Inlay für ein solches Sicherheitsdokument umfasst, wird beim Ausführen des Spritzprägeverfahrens ein Laschenabschnitt ausgebildet, der aus dem ersten Kunststoffmaterial oder einem dritten Kunststoffmaterial, das eine höhere Elastizität als das zweite Kunststoffmaterial aufweist, gebildet. Man erhält somit ein Halbzeug, in dem ein Laschenabschnitt ausgebildet ist, der aus dem ersten Kunststoffmaterial oder einem dritten Kunststoffmaterial, das eine höhere Elastizität als das zweite Kunststoffmaterial aufweist, ausgebildet ist.

Vorzugsweise sind der Laschenabschnitt und das Inlay zumindest formschlüssig miteinander verbunden. In der Regel ist oder wird darüber hinaus auch eine kraftschlüssige oder sogar stoffschlüssige Verbindung während des Spritzprägeverfahrens ausgebildet.

Einige Ausführungsformen von Sicherheitsmerkmalen oder Sicherheitselementen erfordern lokal transparente Dokumentenkörperbestandteile. Daher ist es bei einer Ausführungsform vorgesehen, dass eines der verwendeten Kunststoffmaterialien zumindest in einem Wellenlängenbereich transparent ist und hierdurch ein Fensterabschnitt gebildet ist. Ein Fensterabschnitt ist ein Abschnitt des Inlays, welcher aufgrund der Transparenz einen Durchtritt elektromagnetischer Strahlung zumindest eines Wellenlängenbereichs quer zur flächigen Erstreckung des Inlays gestattet. Als elektromagnetische Strahlung kommt hier insbesondere Licht im Wellenlängenbereich vom Infratoren bis zum Ultravioletten in Betracht.

Alternativ zu dem Bereitstellen einer Trägerfolie, welche vorzugsweise bereits mit Funktionselementen bestückt ist, ist bei einer alternativen Ausführungsform des Verfahrens vorgesehen, dass zunächst eine Inlayform mit einer Aussparung in einem Spritzprägeschritt aus dem ersten oder dem zweiten Kunststoffmaterial hergestellt wird, anschließend ein Funktionselement oder ein Sicherheitselement in die Aussparung eingebracht wird und anschließend in einem Spritzprägeschritt das Funktionselement oder das Sicherheitselement mit dem jeweils anderen des ersten Kunststoffmaterials oder des zweiten Kunststoffmaterials fixiert wird. Vorzugsweise wird hierbei die Aussparung so aufgefüllt, dass sich eine plane Oberfläche bildet, die bündig mit einer Oberseite der Inlayform abschließt.

Alternativ oder zusätzlich ist bei einer weiteren Ausführungsform vorgesehen, dass auf der Inlayform eine Folie, insbesondere in einem Laminationsschritt, befestig wird, so dass die Aussparung durch die Folie überdeckt wird.

Als Sicherheitselemente können beliebige Sicherheitselemente in die Aussparung eingefügt werden, beispielsweise Hologramme, bedruckte Papierabschnitte oder Ähnliches, um nur einige mögliche Sicherheitselemente aufzuführen.

Die Verwendung zweier unterschiedlicher Kunststoffmaterialien gestattet es, einen großen Volumenbereich des Inlays aus demselben Kunststoffmaterial oder einem Derivat desselben Kunststoffmaterials zu fertigen, mit dem das Inlay später zu einem Dokumentenkörper, beispielsweise in einem Laminationsschritt, zusammengefügt werden soll. Lediglich die Volumenbereiche, die an Funktionselemente angrenzen, die bei mechanischer oder thermischer Belastung zur Ausbildung von Mikrorissen neigen, werden bei solchen Ausführungsformen durch ein eine solche Mikrorissbildung vermeidendes Kunststoffmaterial, insbesondere ein höher elastisches Kunststoffmaterial gebildet. So werden beispielsweise Ausführungsformen von Halbzeugen bevorzugt, bei denen die Trägerfolie aus einem Polycarbonatmaterial besteht und das mindestens eine Funktionselement ein Chipmodul ist, welches durch ein erstes Kunststoffmaterial umlaufend ummantelt wird, welches beispielsweise thermoplastisches Polyurethan ist. Eine mit dem Chipmodul verbundene Antenne, welche auf die Trägerfolie, welche aus Polycarbonat ist, aufgedruckt oder aufgelegt ist, kann dann in einem Spritzprägeschritt durch ein Polycarbonatmaterial überdeckt und hiervon ummantelt werden. Man erhält somit ein Inlay, dessen Hauptvolumenbestandteil aus Polycarbonatmaterial besteht und lediglich angrenzend an das Chipmodul aus einem thermoplastischen Polyurethan besteht. Solche Ausführungen bieten den Vorteil, dass das Inlay sich besonders gut mit weiteren Folienschichten zu einem Dokumentenkörper zusammenfügen lässt und hierbei ein monolithischer Dokumentenkörper entsteht. Die Laminationsprobleme, die zwischen unterschiedlichen Kunststoffmaterialien bestehen, werden hier weitestgehend vermieden, da eine überwiegende Fläche des Inlay bei einer solchen Ausführungsform aus Polycarbonat besteht, aus dem auch die hierauf vorzugsweise auflaminierten weiteren Folien bestehen. Ein möglicherweise benötigter Laschenabschnitt, welcher aus dem Inlay herausragt und in diesem zumindest formflüssig, vorzugsweise auch kraft- und stoffschlüssig verbunden ist, wird dann wiederum beispielsweise aus einem thermoplastischen Polyurethan gefertigt. Dieses kann in demselben Spritzprägeschritt erfolgen, in dem auch das Chipmodul umspritzt wird oder auch anschließend erfolgen. Die Trägerfolie wird vorzugsweise von einer Rolle bereitgestellt. Da das Inlay vorzugsweise nur eine geringe Materialstärke aufweist, vorzugsweise im Bereich einiger hundert Mikrometer, kann die Folie nach dem Fertigen des Inlay auch wieder aufgerollt werden. Um eine mechanische Stabilität auf der Trägerfolie zu gewährleisten, werden beim Ausbilden des Halbzeug bei einigen Ausführungsformen ausgehend von dem Inlay, Stege und gegebenenfalls zusätzlich ein umlaufender Rahmen ausgebildet, der über die Stege mit dem Inlay verbunden ist. Die Stege können beispielsweise durch das Kunststoffmaterial gebildet sein oder werden, das beim Schließen der Spritzprägeform als überschüssiges Material des Inlays austritt.

Es versteht sich, dass auf einer Trägerfolie zeitgleich und/oder nacheinander mehrere Inlays der oben beschriebenen Art ausgebildet werden können.

Das erfindungsgemäße Verfahren kann auch verwendet werden, um ein fertiges Wert- oder Sicherheitsdokument herzustellen. Ebenso können auch weitere Schritte ausgeführt werden, um weitere Sicherheitsmerkmale in das Halbzeug oder Sicherheitsdokument zu integrieren. Ferner kann ein Halbzeug als fertiges Sicherheitsdokument hergestellt oder genutzt werden. Weitere Ausführungsformen sehen vor, das Halbzeug zur Herstellung eines Wert- oder Sicherheitsdokuments zu verwenden oder das Halbzeug in einem Wert- oder Sicherheitsdokument zu verwenden.

Nachfolgend wird die Erfindung anhand bevorzugter Ausführungsformen unter Bezugnahme auf eine Zeichnung näher erläutert. Hierbei zeigen:
- Fig. 1: eine schematische Darstellung eines Ablaufdiagramms eines Verfahrens;
- Fig. 2: eine schematische Ansicht eines Inlays;
- Fig. 3: eine schematische Ansicht eines Ausschnitts eines vergleichbaren Beispiels eines Inlays, das mit einem Laschenabschnitt ausgebildet ist;
- Fig. 4: eine schematische Ansicht mehrerer Inlays, die mit Stegen und Rahmen auf einer Trägerfolie angeordnet sind;
- Fig. 5: eine schematische Ansicht einer weiteren Ausführungsform eines Inlays mit einem Fenster;
- Fig. 6: eine schematische Ansicht einer weiteren Ausführungsform, bei der ein Sicherheitselement in das Inlay integriert ist und
- Fig. 7: eine weitere Ausführungsform eines Inlay, in welches ein Sicherheitselement integriert ist.

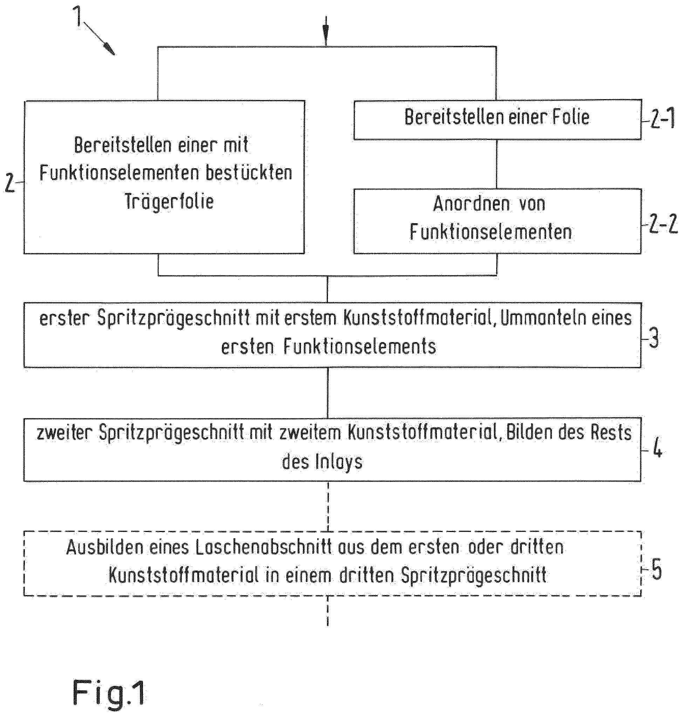

In Fig. 1 ist schematisch ein Ablaufdiagramm 1 eines Verfahrens zur Herstellung eines Halbzeugs dargestellt, welches ein Inlay umfasst oder ist, welches wiederum für eine Herstellung eines Sicherheitsdokuments vorgesehen ist. Gemäß einer Alternative wird eine Trägerfolie, welche mit Funktionselementen bestückt ist, bereitgestellt 2. Bei der Trägerfolie kann es sich beispielsweise um eine Polycarbonatfolie handeln. Es kann jedoch auch jede andere Kunststofffolie sein, welche sich zur Herstellung von Dokumentenkörpern für Sicherheitsdokumente eignet. Diese umfassen beispielsweise die Materialien, welche oben in der Beschreibungseinleitung genannt sind.

Als Funktionselemente kommen insbesondere Chipmodule (gekapselte und/oder ungekapselte Chips), Antennen, Stromversorgungseinrichtungen, beispielsweise Batterie, Solarzellen, Anzeigeelemente, beispielsweise Leuchtdioden oder LCD-Displayelemente oder Ähnliches in Betracht.

Gemäß einer alternativen Ausführungsform wird eine Trägerfolie bereitgestellt 2-1. Diese wird anschließend mit den Funktionselementen bestückt 2-2. Um eine geringe Bauhöhe des Inlays zu erreichen, werden als Chipmodule ausgebildete Funktionselemente beispielsweise in Ausstanzungen der Trägerfolie angeordnet. Als Antenne ausgebildete Funktionselemente, die beispielsweise mit einem Chipmodul verbunden werden, sind bei einigen Ausführungsformen als metallische Drähte ausgebildet, die auf der Trägerfolie angeordnet werden. Alternativ oder zusätzlich können Leiterbahnen auf die Trägerfolie aufgedruckt werden. Anschließend wird ein erster Spritzprägeschritt ausgeführt. Hierbei wird eine Spritzprägeform so angeordnet, dass ein Hohlraum vorzugsweise das mindestens eine Funktionselement umgibt. In diesen wird ein erstes erwärmtes Kunststoffmaterial eingespritzt und anschließend die Spritzprägeform geschlossen, um eine Fixierung des mindestens einen Funktionselements, beispielsweise eines Chipmoduls auf der Trägerfolie zu erreichen 3. Vorzugsweise wird das als Chipmodul ausgebildete mindestens eine Funktionselemente umlaufend so von dem ersten Kunststoffmaterial ummantelt, dass dieses nach dem Entnehmen aus der Spritzprägeform und einem Abkühlen bündig mit einer Oberfläche des Chipmoduls abschließt. Bei nicht gekapselten Chips kann es auch vorteilhaft sein, das Funktionselement von einer Oberfläche und gegebenenfalls zusätzlich einer Unterseite vollständig zu ummanteln.

Nach einer kurzen Abkühlung wird die Spritzprägeform entfernt und eine zweite Spritzprägeform angeordnet, so dass ein weiterer Teil oder der Rest des Inlays in einem weiteren Spritzprägeschritt unter Verwendung eines zweiten Kunststoffmaterials, das von dem ersten Kunststoffmaterial verschieden ist, ausgebildet wird 4. Hierbei wird beispielsweise eine ebenfalls auf der Trägerfolie angeordnete Antennenstruktur von dem zweiten Kunststoffmaterial überdeckt. Das zweite Kunststoffmaterial bildet dann gemeinsam mit dem ersten Kunststoffmaterial einen Monoblock aus, der das Inlay bildet. Bei einigen Ausführungsformen ist vorgesehen, dass in weiteren Spritzprägeschritten weitere Bestandteile des Inlays oder gegebenenfalls ein Laschenabschnitt aus einem dritten Kunststoffmaterial oder dem ersten Kunststoffmaterial ausgebildet werden 5.

Die Verfahrenschritte können iterativ ausgeführt werden, um auf einer Folienbahn eine Vielzahl von Inlays zu bilden.

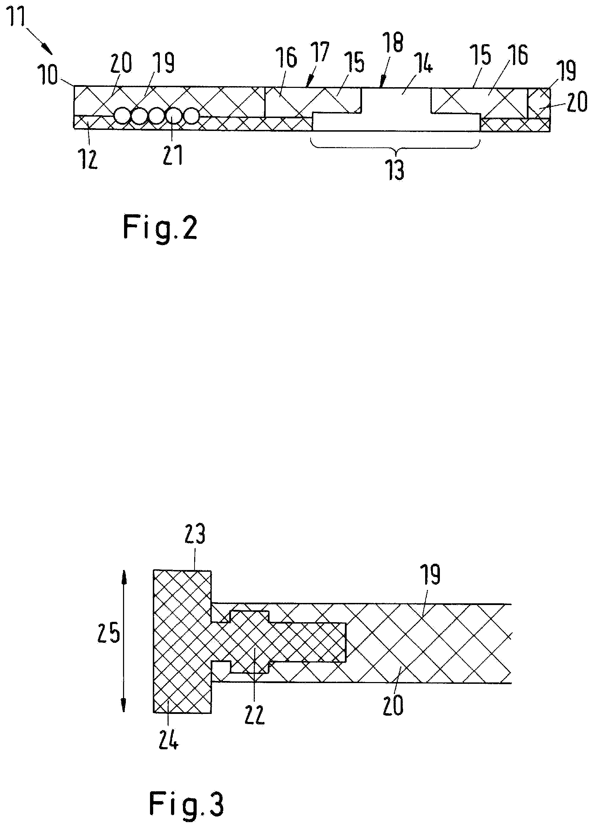

In Fig. 2 ist ein als Inlay 10 ausgebildetes Halbzeug 11 schematisch in einer Schnittdarstellung gezeigt. Dieses umfasst eine Trägerfolie 12. In einer Aussparung 13 ist ein Chipmodul 14 angeordnet, welches ein erstes Funktionselement darstellt. Dieses ist in einem ersten Spritzprägeschritt von einem ersten Kunststoffmaterial 15 umlaufend ummantelt. Das erste Kunststoffmaterial 15 bildet somit einen ersten Volumenbereich 16. Dieser ist so ausgebildet, dass er unter Normalbedingung eine Oberfläche 17 aufweist, die bündig mit einer Oberfläche 18 des Chipmoduls 14 abschließt. Der erste Volumenbereich 16 ist von einem zweiten Volumenbereich 19 umgeben, der aus einem zweiten Kunststoffmaterial 20 in einem zweiten Spritzprägeschritt hergestellt ist. Das zweite Kunststoffmaterial überdeckt und umschließt gemeinsam mit der Trägerfolie 12 eine Antenne 21, welche ein weiteres Funktionselement des Inlays 10 darstellt. Die Antenne 21 ist mit dem Chipmodul 14 verbunden, welches in der gezeigten Schnittdarstellung nicht sichtbar ist. Durch die Ummantelung des Chipmoduls 14 in dem Spritzprägeschritt durch das erste Kunststoffmaterial 15, welches vorzugsweise elastischer als das zweite Kunststoffmaterial 20 ist, wird das Chipmodul 14 während des zweiten Spritzprägeschritts, beispielsweise vor einem Deplatzieren relativ zu der Antenne 21 geschützt. Das erste und das zweite Kunststoffmaterial werden in den Spritzprägeschritten jeweils so aufgebracht, dass keine Lufteinschlüsse oder Hohlräume zwischen der Trägerfolie 12 und/oder den Funktionsmodulen bzw. jeweils anderen bereits vorher erstellten Volumenbereichen verbleiben. Hierdurch wird sichergestellt, dass sich keine Fließfronten ausbilden, die später auf dem Inlay zu sehen sind und sich gegebenenfalls bei der weiteren Fertigung nachteilig auf eine Oberfläche eines Sicherheitsdokuments auswirken können.

In Fig. 3 ist schematisch ein Ausschnitt eines Querschnitts eines weiteren Halbzeugs 11' eines vergleichbaren Beispiels gezeigt. Gleiche technische Merkmale sind allen Figuren mit denselben Bezugszeichen versehen. Gezeigt ist ein Randabschnitt eines Inlays 10, der durch das zweite Kunststoffmaterial 20 in einem Spritzprägeverfahren gebildet ist. Ein hierbei ausgebildeter Hohlraum 22 ist mit dem ersten Kunststoffmaterial oder einem dritten Kunststoffmaterial in einem Spritzprägeschritt ausgefüllt, um einen Laschenabschnitt 23 auszubilden und eine formschlüssige Verbindung zwischen dem zweiten Volumenbereich 19, der aus dem zweiten Kunststoffmaterial 20 gebildet ist, und dem Laschenabschnitt 23, welcher beispielsweise aus dem dritten Kunststoffmaterial 24 gebildet ist, herzustellen. Quer zu einer flächigen Erstreckung des Inlays 10 weist der Laschenabschnitt 23 eine größere Stärke 25 auf. Diese Stärke 25 des Laschenabschnitts 23 entspricht vorzugsweise einer Gesamtstärke eines herzustellenden Sicherheitsdokuments.

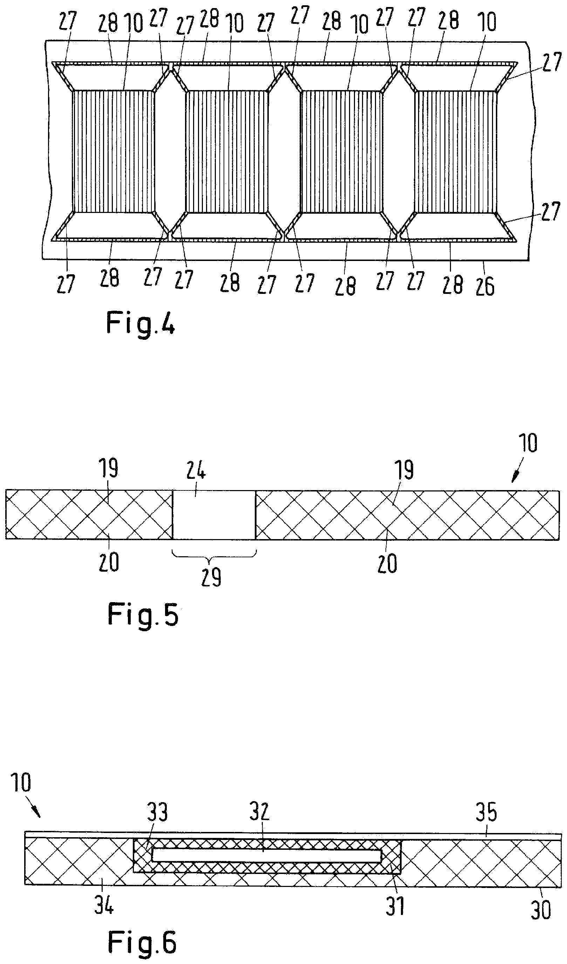

In Fig. 4 ist ein Folienabschnitt 26 gezeigt, auf dem mehrere Inlays 10 ausgebildet sind. Diese sind jeweils über Stege 27 mit einem Rahmen 28 verbunden. Die Stege und der Rahmen werden ebenfalls in Spritzprägeschritten ausgebildet. Durch die Ausbildung des Halbzeugs in dieser Weise kann der Folienabschnitt 26 mit den Inlays 10, dem Rahmen 28 und den Stegen 27 auf eine Folie aufgerollt werden, welches für die weitere Fertigung von Vorteil ist.

In Fig. 5 ist schematisch ein Schnitt durch ein Inlay 10 dargestellt, bei dem eines der verwendeten Kunststoffmaterialien, beispielsweise ein drittes Kunststoffmaterial 24 transparent ist. Durch das dritte Kunststoffmaterial 24 ist ein Fenster 29 ausgebildet, welches das gesamte Inlay 10 senkrecht zu einer längsflächigen Erstreckung durchdringt und für mindestens einen Wellenlängenbereich, d.h. im sichtbaren, ultravioletten oder infraroten Wellenlängenbereich, transparent ist. Ein durch beispielsweise das zweite Kunststoffmaterial 19 ausgebildeter zweiter Volumenbereich 20 ist beispielsweise opak ausgebildet.

Anhand der Fig. 6 soll eine alternative Ausführungsform eines Verfahrens zur Herstellung eines Halbzeugs, welches ein Inlay ist oder umfasst, beschrieben werden. In einem ersten Spritzprägeschritt wird eine Inlayform 30 gebildet, welche eine Aussparung 31 umfasst. In diese Aussparung 31 wird ein Funktionselement oder ein Sicherheitselement 32 eingebracht. Anschließend wird die Aussparung 31 in einem weiteren Spritzprägeschritt mit einem weiteren Kunststoffmaterial 33, welches sich von dem anderen Kunststoffmaterial 34 unterscheidet, aus dem die Inlayform 30 gebildet ist, aufgefüllt. Das weitere Kunststoffmaterial 33 ist vorzugsweise elastischer als das andere Kunststoffmaterial 34, aus dem die Inlayform 30 gebildet ist. Vorzugsweise wird die Inlayform 30 mit einer Folie 35 überdeckt, so dass die mit dem weiteren Kunststoffmaterial aufgefüllte Aussparung 31 vollflächig überdeckt ist. Die Folie 35 wird mit der Inlayform 30 verbunden, vorzugsweise in einem Laminationsschritt.

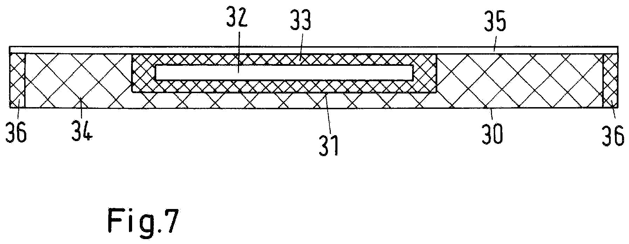

In Fig. 7 ist eine weitere Ausführungsform ähnlich zu der nach Fig. 6 gezeigt, bei der jedoch zusätzlich Randbereiche aus noch einem anderen Kunststoffmaterial 36 in einem weiteren Spritzprägeschritt ausgebildet sind.

Bei den beschriebenen Ausführungsformen ist es vorteilhaft, wenn jeweils das Kunststoffmaterial, welches an ein besonders empfindliches Funktionselement und/oder Sicherheitselement angrenzt und dieses ummantelt oder an ein Funktions- oder Sicherheitselement, welches stark abweichende physikalische Eigenschaften unter mechanischer oder thermischer Belastung aufweist, angrenzt und dieses ummantelt, aus einem elastischeren Kunststoffmaterial hergestellt ist, als die volumenmäßig größeren Anteile des Inlays.

Ebenso sind Ausführungsformen vorgesehen, bei denen beispielsweise abweichend von den Ausführungsformen nach Fig. 6 oder 7 anstelle der Folie 35 ein Folienverbund, gegebenenfalls mit bereits eingebrachten Sicherheitsmerkmalen und -elementen, verwendet wird. Ebenso werden Ausführungsformen vorgeschlagen, die zusätzlich zu der Trägerfolie 12 bei den Ausführungsformen nach Fig. 1 oder Fig. 2 oder zusätzlich zu dem Folieabschnitt 26 bei der Ausführungsform nach Fig. 4 oder der Folie 35 bei den Ausführungsformen nach Fig. 6 oder Fig. 7 eine weitere Folie oder einen weiteren Folienverbund umfassen, die jeweils gegenüberliegend der genannten Trägerfolie 12 oder dem Folienabschnitt 26 oder der Folie 35 angeordnet sind und in dem oder den Spritzprägeschritten mit hinterspritzt und in das hergestellte Halbzeug (oder Fertigprodukt) integriert werden.

### Bezugszeichenliste

- 1: Ablaufdiagramm
- 2: Bereitstellen einer bestückten Trägerfolie
- 2-1: Bereitstellen einer Trägerfolie
- 2-2: Bestücken der Trägerfolie mit Funktionselementen
- 3: Ausführen eines ersten Spritzprägeschritts mit einem ersten Kunststoffmaterial
- 4: Ausführen eines zweiten Spritzprägeschritts mit einem zweiten Kunststoffmaterial
- 5: Ausführen eines dritten Spritzprägeschritts zum Ausbilden eines Laschenabschnitts
- 10: Inlay
- 11: Halbzeug
- 12: Trägerfolie
- 13: Aussparung
- 14: Chipmodul
- 15: erstes Kunststoffmaterial
- 16: erster Volumenbereich
- 17: Oberfläche
- 18: Oberfläche Chipmodul
- 19: zweites Kunststoffmaterial
- 20: zweiter Volumenabschnitt
- 21: Antenne
- 22: Hohlraum
- 23: Laschenabschnitt
- 24: drittes Kunststoffmaterial
- 25: Stärke des Laschenabschnitts
- 26: Folienabschnitt
- 27: Stege
- 28: Rahmen
- 29: Fenster
- 30: Inlayfom
- 31: Aussparung
- 32: Sicherheitselement
- 33: weiteres Kunststoffmaterial
- 34: anderes Kunststoffmaterial
- 35: Folie
- 36: noch anderes Kunststoffmaterial

## Patentansprüche

1. Verfahren zum Herstellen eines Halbzeugs (11), welches ein Inlay (10) für ein Dokument umfasst oder ist, umfassend die Schritte:
Bereitstellen mindestens eines ersten Kunststoffmaterials (15) und Bereitstellen mindestens eines von dem ersten Kunststoffmaterial (15) verschiedenen zweiten Kunststoffmaterials (20),
Ausführen eines Spritzprägeverfahrens unter Verwendung des ersten und des zweiten Kunststoffmaterials (15, 20) zum Ausbilden des Inlays (10), wobei das Inlay (10) senkrecht zu seiner flächigen Erstreckung eine einheitliche Stärke aufweist.

2. Verfahren nach Anspruch 1, **dadurch gekennzeichnet, dass** eine Trägerfolie (12) mit mindestens einem Funktionselement bestückt wird oder eine mit mindestens einem Funktionselement bestückte Trägerfolie (12) bereitgestellt wird und in einem ersten Spritzprägeschritt des Spritzprägeverfahrens das mindestens eine Funktionselement von dem ersten Kunststoffmaterial (15) ummantelt wird und anschließend in einem weiteren Spritzprägeschritt das zweite Kunststoffmaterial (20) aufgebracht wird.

3. Verfahren nach Anspruch 1, **dadurch gekennzeichnet, dass** zunächst eine Inlayform (30) mit einer Aussparung (31) in einem Spritzprägeschritt aus dem ersten oder dem zweiten Kunststoffmaterial (15, 20) hergestellt wird, anschließend ein Funktionselement oder ein Sicherheitselement (32) in die Aussparung (31) eingebracht wird und anschließend in einem Spritzprägeschritt das Funktionselement oder das Sicherheitselement (32) mit dem jeweils anderen des ersten Kunststoffmaterials (15) oder des zweiten Kunststoffmaterials (20) fixiert wird.

4. Verfahren nach einem der Ansprüche 1 bis 3, **dadurch gekennzeichnet, dass** das erste Kunststoffmaterial (15) eine höhere Elastizität als das zweite Kunststoffmaterial (20) aufweist.

5. Verfahren nach einem der Ansprüche 1 bis 4, **dadurch gekennzeichnet, dass** beim Ausführen des Spritzprägeverfahrens ein Laschenabschnitt (23) gebildet ist, der aus dem ersten Kunststoffmaterial (15) oder einem dritten Kunststoffmaterial (24), das eine höhere Elastizität als das zweite Kunststoffmaterial (20) aufweist, gebildet wird.

6. Verfahren nach einem der Ansprüche 1 bis 5, **dadurch gekennzeichnet, dass** eines der verwendeten Kunststoffmaterialien transparent ist und mit diesem in dem Inlay (10) ein Fensterabschnitt erstellt wird.

7. Verwendung eines Verfahrens nach einem der Ansprüche 1 bis 6 zum Herstellen eines Wert- und/oder Sicherheitsdokuments.

## Claims

1. A method for producing a semifinished product (11), which comprises or is an inlay (10) for a document, comprising the steps:
providing at least one first plastic material (15) and providing at least one second plastic material (20) different to the first plastic material (15),
carrying out an injection-compression molding method using the first and second plastic materials (15, 20) in order to form the inlay (10), wherein the inlay (10) has a uniform thickness perpendicularly to its planar extent.

2. The method as claimed in claim 1, **characterized in that** a carrier sheet (12) is fitted with at least one functional element or a carrier sheet (12) fitted with at least one functional element is provided, and in a first injection-compression molding step of the injection-compression molding method the at least one functional element is embedded by the first plastic material (15) and subsequently the second plastic material (20) is applied in a further injection-compression molding step.

3. The method as claimed in claim 1, **characterized in that** an inlay mold (30) comprising a recess (31) is initially produced from the first or second plastic material (15, 20) in an injection-compression molding step, a functional element or a security element (32) is subsequently introduced into the recess (31) and subsequently the functional element or the security element (32) is fixed in an injection-compression molding step with the respective other of the first plastic material (15) or the second plastic material (20).

4. The method as claimed in one of claims 1 to 3, **characterized in that** the first plastic material (15) has a higher elasticity than the second plastic material (20).

5. The method as claimed in one of claims 1 to 4, **characterized in that** a tab section (23), which is formed from the first plastic material (15) or a third plastic material (24), which has a higher elasticity than the second plastic material (20), is formed when carrying out the injection-compression molding method.

6. The method as claimed in one of claims 1 to 5, **characterized in that** one of the plastic materials used is transparent and a window section is formed therewith in the inlay (10).

7. Use of a method as claimed in one of claims 1 to 6 in order to produce a value and/or security document.

## Revendications

1. Procédé de fabrication d'un demi-produit (11), qui comporte ou est un élément incrusté (10) pour un document, comportant les étapes :
de fourniture d'au moins une première matière plastique (15) et de fourniture d'au moins une deuxième matière plastique (20) différente de la première matière plastique (15),
d'exécution d'un procédé d'injection-compression en utilisant la première et la deuxième matière plastique (15, 20) pour la formation de l'élément incrusté (10), dans lequel l'élément incrusté (10) présente une épaisseur uniforme perpendiculairement à son étendue surfacique.

2. Procédé selon la revendication 1, **caractérisé en ce qu'**un film porteur (12) est équipé d'au moins un élément fonctionnel ou un film porteur (12) équipé d'au moins un élément fonctionnel est fourni et, dans une première étape d'injection-compression du procédé d'injection-compression, l'au moins un élément fonctionnel est enrobé par la première matière plastique (15) et ensuite, dans une autre étape d'injection-compression, la deuxième matière plastique (20) est appliquée.

3. Procédé selon la revendication 1, **caractérisé en ce que**, d'abord un moule d'élément incrusté (30) avec un évidement (31) est fabriqué dans une étape d'injection-compression à partir de la première ou de la deuxième matière plastique (15, 20), ensuite un élément fonctionnel ou un élément de sécurité (32) est introduit dans l'évidement (31) et ensuite, dans une étape d'injection-compression, l'élément fonctionnel ou l'élément de sécurité (32) est fixé à respectivement l'autre de la première matière plastique (15) ou de la deuxième matière plastique (20).

4. Procédé selon l'une quelconque des revendications 1 à 3, **caractérisé en ce que** la première matière plastique (15) présente une plus grande élasticité que la deuxième matière plastique (20).

5. Procédé selon l'une quelconque des revendications 1 à 4, **caractérisé en ce que**, lors de l'exécution du procédé d'injection-compression, est formée une section d'attache (23) qui est formée à partir de la première matière plastique (15) ou d'une troisième matière plastique (24) qui présente une plus grande élasticité que la deuxième matière plastique (20).

6. Procédé selon l'une quelconque des revendications 1 à 5, **caractérisé en ce qu'**une des matières plastiques utilisées est transparente et qu'avec celle-ci est créée une section de fenêtre dans l'élément incrusté (10).

7. Utilisation d'un procédé selon l'une quelconque des revendications 1 à 6 pour la fabrication d'un document de valeur ou de sécurité.
